# EUROPEAN PATENT SPECIFICATION

(11) **EP 2 882 139 B1**
(45) Date of publication and mention of the grant of the patent: **13.02.2019**
(21) Application number: 14196084.9
(22) Date of filing: 03.12.2014
(51) Int. Cl.: H04L 12/24, G06F 11/30, G06F 11/34

(54) **System and method for IT servers anomaly detection using incident consolidation**
System und Verfahren zur Erkennung von Netzwerkanomalien bei IT-Servern mithilfe von Vorfallkonsolidierung
Système et procédé de détection d'anomalie de serveurs informatiques utilisant une consolidation incidente

(30) Priority: 05.12.2013 IL 22981913
(43) Date of publication of application: 10.06.2015
(73) Proprietor: Deutsche Telekom AG, 53113 Bonn (DE)
(72) Inventor: Löhlein, Bernard, 97837 Erlenbach (DE); Gorodtzki, Yevgenia, 8763819 Ofakim (IL); Hendler, Danny, 5913201 Bat Yam (IL); Zacharish, Barak, 4421919 Kfar saba (IL); Gorden, Daniel, Tene (IL); Gorelik, Michael, 8471616 Beer Sheva (IL)
(74) Representative: Weickmann & Weickmann PartmbB

(56) References cited:
- WO-A1-2013/043170
- US-A1- 2008 250 497
- US-A1- 2011 119 100
- US-A1- 2011 296 005
- US-A1- 2013 024 172

## Description

### Field of invention

The invention relates to the field of computer systems. More specifically the invention relates to a system and method for anomaly detection in IT (Information Technology) servers using incident consolidation.

### Background of the invention

Automatically monitoring the performance of IT servers is a crucial task for most medium and large-scale organizations. A key ingredient of automatic IT server monitoring is anomaly detection systems, which learn the normal behavior of IT servers and alert when statistically significant deviations from this behavior are suspected.

Anomaly detection systems must maintain good balance between their true positive rate, i.e. the rate at which they detect and alert on real incidents, and false positive rate, i.e. the rate in which alerts are issued although no real incident occurred. If the true positive rate is too low, most real incidents will not be alerted upon and the anomaly detection system will fail to meet its goal. If the rate of false positives is too high, administrators will tend to ignore system alerts and alerts on real incidents may go unnoticed.

Methods and systems for anomaly detection in networks are known in the art. For example: US20080250497 discloses a statistical method and system for network anomaly detection wherein a statistics based profile for said network over a period is generated to analyze potentially anomalous network activity to determine if said network activity is anomalous by comparing current activity against the profile. However, monitoring of servers is different from network monitoring in substantial ways. Specifically, there are many significant problems, such as server misconfiguration, malwares and software and hardware issues that may be detected by modeling the behavior of servers but, in general, may not be detected by network monitoring. Moreover, the approach of US20080250497 relies on user-configured thresholds, and it is not entirely automatic.

US2011/0296005 teaches a system and method is provided for detecting, tracking and/or blocking control signal attacks, which can occur between local computer systems and/or between remote computer systems, network links, and/or routing systems over a computer network. This application is primarily concerned with providing a method for monitoring control signal traffic over a computer network comprising a plurality of network communication systems.

It is therefore an object of the invention to provide a system and method for anomaly detection in IT servers wherein a good balance between the TP (True Positive) rate and the FP (False Positive) rate is maintained, and the number of alerts is reduced.

It is another object of the present invention to provide a system and method for anomaly detection in IT servers using an automatic and effective way of transforming point anomalies to logical incident reports.

Further purposes and advantages of this invention will appear as the description proceeds.

### Summary of the Invention

The invention is defined by the system and the method according to claims 1 and 8.
In particular, in a first aspect the invention is a system for anomaly detection in IT servers. The system comprises:
a. a data import unit (120), that receives a time-series of measurements of multiple server features and/or measurements corresponding to higher level time-varying features from one or more monitored servers (110) and transfers the time-series measurements to a detection framework data base (130) and to a time-series anomaly detectors module (140);
b. a detection framework data base (130), that receives from the data import unit (120) the time-series of measurements, receives from the time-series anomaly detectors module (140) point anomaly score objects each
c. consisting of a timestamp value t, an anomaly score r, a server name S, a feature name F, and a server-farm name M, receives from a model learners module (150) statistical models (160), receives from an Incident Consolidation And Filtering (ICAF) module (170) incident alerts, and receives from a server farm monitor (195) incident reports that are reports on true incidents that occurred in monitored server farms; and transfers the statistical models (160) to the time-series anomaly detectors module (140) and transfers the time-series measurements and the incident reports to the model learners module (150);
d. a model learners module (150), which uses the time series of measurements and the incident reports that are read from the framework database (130) to generate the statistical models (160);
e. a time-series anomaly detectors module (140), which receives the time-series measurements from the data import unit (120) and the statistical models (160) from the detection framework data base (130); computes a range of normal values for each feature measurement based on the statistical models (160); and implements a time-series anomaly detection algorithm to compute the point anomaly scores, which quantify the extent by which each of the measurements falls outside of the range of normal values;
f. an Incident Consolidation And Filtering (ICAF) module (170), which comprises and runs an ICAF algorithm, which checks each of the point anomaly scores according to a predetermined set of ICAF parameters and generates incident alerts by consolidating the point anomaly scores; and
g. an Incident Consolidation And Filtering (ICAF) Optimizer module (190), which uses the module point anomaly scores received from the time-series anomaly detector module (140), the incident alerts received from the ICAF module (170) and the incident reports received from the server farm monitor (195) as input to an optimization algorithm that optimizes the values of the ICAF parameters that are used by the ICAF algorithm to generate the incident alerts;
h. a server farm monitor (195) that produces the incident reports, which are reports of true incidents that occurred in the monitored servers; and
i. a system administrator (197) who receives the incident alerts generated by the ICAF module (170).

The system is characterized in that the ICAF module (170) consolidates the sequence of the point anomaly scores to reduce the rate of the incident alerts thus allowing an administrator to only inspect and analyze a relatively small number of alerts; and the ICAF optimizer module (190) continuously tunes and transfers the ICAF parameters to the ICAF module (170) so as to improve the ICAF algorithm in terms of the balance between its true positive rate and its false positive rate.

In embodiments of the system of the invention the time-series measurement is CPU load.

In embodiments of the system of the invention the time-series measurement is memory consumption.

In embodiments of the system of the invention the time-series measurement is I/O level of activity.

In embodiments of the system of the invention the time-series measurement is a rate of business transactions.

In embodiments of the system of the invention the time-series measurement is an average transaction latency.

In embodiments of the system of the invention the ICAF parameters are:
i. k, α, - k is a number of sequence objects and α is a number of anomaly score; wherein, a sequence known as an almost-consecutive sequence is required to have an object with anomaly score of at least α every at most k sequence objects;
ii. β - a minimum number of score objects in an almost-consecutive sequence that are required for a local aggregated anomalies sequence to be generated;
iii. γ - a minimum time duration for a sequence of score objects that is required for a local aggregated anomalies sequence to be generated;
iv. δ - a score value such that a sequence of score objects is required to have an object with this score or higher for a local aggregated anomalies sequence to be generated;
v. ε - a minimum time difference between a new local aggregated anomalies sequence and the previous local aggregated anomalies sequence, if any, for the same farm/server/feature for the new sequence not to be appended to the previous sequence; and
vi. ζ - a minimum time difference between a new local aggregated anomalies sequence and the previous global incident, if any, for the same farm for the new sequence not to be appended to the previous global incident.

In a second aspect the invention is a method of using the system of the first aspect for incident consolidation for IT server anomaly detection. The method comprises the steps of:
a. receiving at a data import unit (120) a time-series of measurements of multiple server features and/or measurements corresponding to higher level time-varying features from one or more monitored servers;
b. receiving at a time-series anomaly detectors module (140) the time-series measurements from the data import unit (120) and statistical models (160) generated by a model learners module (150);
c. implementing in the time-series anomaly detectors module (140) a time-series anomaly detection algorithm to compute a series of point anomaly scores, wherein each point anomaly score object consists of a timestamp value t, an anomaly score r, a server name S, a feature name F, and a server-farm name M;
d. receiving at an Incident Consolidation And Filtering (ICAF) module (170) the series of point anomaly score objects ;
e. running an ICAF algorithm in the ICAF module (170) to compute the longest sequence of almost-consecutive anomaly score objects ending with the point anomaly score object, and representing the longest sequence as Q; wherein Q is a sequence of anomaly score objects, such that at least every k'th object in the sequence has anomaly score of at least a;
f. running the ICAF algorithm to check if either the length of Q is less than an ICAF parameter β, which is a minimum number of score objects in Q that are required for a local aggregated anomalies sequence to be generated, or the time duration of Q is less than an ICAF parameter γ, which is a minimum time duration for a sequence of score objects that is required for a local aggregated anomalies sequence to be generated, or the highest score of all score objects in Q is less than an ICAF parameter δ, which is a score value such that a sequence of score objects is required to have an object with this score or higher for a local aggregated anomalies sequence to be generated; if the answer to one of the three checks is yes, then exiting and no new incident alert is generated; if the answer to none of the three checks is yes, then defining Q as a local aggregated anomalies sequence and retrieving the previous local aggregated anomalies sequence corresponding to the same farm, server and feature of Q, if they exist, and denoting the previous local aggregated anomalies sequence as L;
g. running the ICAF algorithm to compute the time difference between when Q starts and L finishes, wherein if L is not empty; if the time difference is smaller than an ICAF parameter ε, which is a minimum time difference between a new local aggregated anomalies sequence and the previous local aggregated anomalies sequence, if any, for the same farm/server/feature for the new sequence not to be appended to the previous sequence, then extending L with all the objects up until the last object of Q and exiting; if the time difference is larger than ε, turning Q to the new, current aggregated anomalies sequence of the specific farm/server/feature combination, and retrieving a previous global incident and denoting the global incident as G, if it exists; and
h. if G is non-empty, running the ICAF algorithm to compute the time difference between when Q starts and G finishes; if this time difference is smaller than an ICAF parameter ζ, which is a minimum time difference between a new local aggregated anomalies sequence and the previous global incident, if any, for the same farm for the new sequence not to be appended to the previous global incident, then extending G with all the objects up until the last object of Q; if the time difference is larger than ζ, turning Q to the new global incident of farm m and generating a new incident alert for Q and providing the incident alert as an output.

According to the method an ICAF optimizer module (190) continuously tunes and transfers δ, ε, and to the ICAF module (170) the ICAF parameters k, α, β, γ, ζ so as to improve the ICAF algorithm in terms of the balance between its true positive rate and its false positive rate.

All the above and other characteristics and advantages of the invention will be further understood through the following illustrative and non-limitative description of embodiments thereof, with reference to the appended drawings. In the drawings the same numerals are sometimes used to indicate the same elements in different drawings.

### Brief description of the drawings

- Fig. 1 schematically shows the architecture of the present invention according to an embodiment of the invention;
- Fig. 2 is a schematic flow diagram of the algorithm of the present invention according to an embodiment of the invention.

### Detailed description of the embodiment of the invention

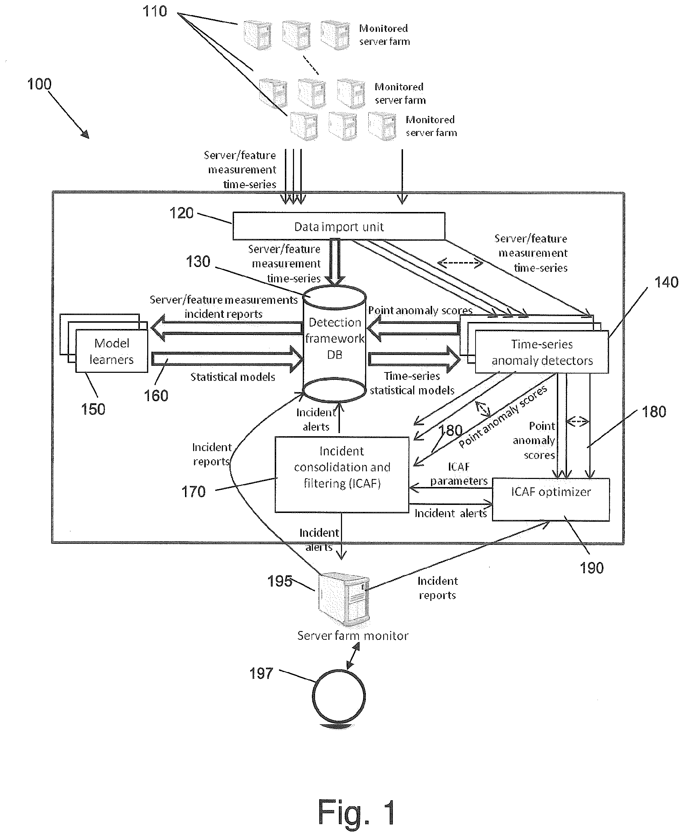

The present invention is a system and method for anomaly detection in IT (Information Technology) servers using incident consolidation. The anomaly detection is done by measuring different computing performance features such as CPU load, memory consumption, I/O level of activity, etc. at some specific frequency and then, consolidating point anomalies, that is, anomalous measurements, to higher-level objects called incidents. Each incident is checked according to parameters of the invention described below, and if the checked incident is found to be an anomaly incident, the incident triggers an incident alert, which is communicated to a system administrator 197 (See Fig. 1) (e.g. by sending an SMS or an email).

The present invention relates to any anomaly detection system which automatically consolidates a sequence of point anomalies to incident alerts and adaptively tunes the parameters of the consolidation algorithm based on feedback received by incident reports.

The present invention covers the consolidation technique regardless of how the anomaly points themselves are computed. Moreover, the anomaly points do not necessarily correspond to physical features of a server, they may also correspond (for example) to logical values, such as the number of computer transactions of a specific type.

Incident alerts must maintain a good balance between true positive rate and false positive rate. The present invention relates to an architecture in which a stream of point anomalies is automatically and effectively consolidated to logical incidents, on which administrator alerts are generated, while limiting the rate of incident alerts to avoid excessive false alarms. The automatic and effective way of transforming point anomalies to logical incident reports reduces the rate of alerts by orders of magnitude, thus allowing an administrator to only inspect and analyze a relatively small number of alerts.

Fig. 1 schematically shows the architecture of the present invention. The present invention comprises six modules which interact with each other: a data import unit 120, a detection framework Data Base 130, a time-series anomaly detectors module 140, a model learners module 150, an Incident Consolidation And Filtering (ICAF) module 170 and an ICAF optimizer module 190. The data import unit 120 receives input from the monitored server farm 110 as server/feature measurement time series, and transfers said measurements to the detection framework Data Base 130 and to the time-series anomaly detectors 140 The model learners 150 receives measurements incident reports from the detection framework Data Base 130, creates statistical models which are transferred to the detection framework Data Base to be stored. The time-series anomaly detectors receive as an input the server/feature measurements time series from the data import unit 120 and receive the time-series statistical models from the detection framework Data Base 130. As an output the time-series anomaly detectors 140 provide point anomaly scores to the detection framework Data Base130 and to the ICAF optimizer 190. The Incident Consolidation And Filtering (ICAF) module 170 receives the points anomaly scores from the Time-series anomaly detectors 140 and receives ICAF parameters which are predetermined according to the system requirements from the ICAF optimizer 190. The ICAF module provides incident alerts to the ICAF optimizer 190, to the detection framework Data Base 130 and to the server farm monitor 195. The ICAF optimizer is in constant connection with the ICAF module and always receives the incident alerts in order to optimize the parameters to get the optimized result and to avoid false alarms. The output of the system is an incident alert which is generated in the ICAF module and which is transferred to the server farm monitor and to the administrator.

The anomaly detection framework 100 monitors multiple server farms. Each server farm 110 is a group of logically-related servers, cooperating in performing some organizational function. Each server sends a stream (time-series) of measurements for multiple features, such as CPU load, memory consumption, the amount of I/O traffic on each network interface, etc. or of measurements corresponding to higher level time-varying features (i.e. more logical features), such as the number/rate of business transactions of a specific type performed by the server, or the average transaction latency. Each such feature is measured at some specific frequency, e.g., every 5 minutes. The time series are sent to the anomaly detection framework 100 and are processed by the data import unit 120 which sends them to both the detection framework database 130 and to time-series anomaly detectors 140. Time-series anomaly detectors module 140 can implement any time-series anomaly detection algorithm (or a combination thereof) known in the art, statistical or other, such as moving average, weighted moving average, ARMA, ARIMA (e.g. Box-Jenkins), or others. These are known techniques based on statistical models and for the sake of brevity are not described herein.

The statistical models 160 used by anomaly detectors 140 are generated by model learners 150. These learners compute their model based on a sliding window of measurements (read from the framework database 130), compute the corresponding statistical models 160 and write them to the framework database 130.

When applied to a measurements time-series, anomaly detectors 140 compute a corresponding series of anomaly scores 180, each quantifying the extent by which the corresponding measurement is anomalous. For instance, the anomaly detector may compute a range of normal values for each feature measurement, called a confidence interval. If the measurement falls outside the confidence interval, the system reports an anomaly score that is proportional to the extent by which the measurement deviated from the interval's boundary.

The incident consolidation and filtering (ICAF) module 170 receives as its input a series of anomaly scores 180 and determines whether or not the series of anomaly scores is a significant incident that needs to be reported to the server farm monitor 195, which is the client system of the anomaly detection framework 100. This is done by consolidating so-called point anomalies (that is, anomalous measurements) to higher-level object called incidents.

The present invention also relates to an incident consolidation and filtering (ICAF) algorithm, which receives multiple time-sequences of measurements per server-farm/server/feature combination and automatically generates a rate-limited stream of incident alarms that consolidate point anomalies (each corresponding to a specific measurement) into higher-level, logical, incidents on which alerts may be generated.

The ICAF module comprises an ICAF algorithm which uses parameters that are automatically tuned by the ICAF optimizer module based on incident reports that are received from a server farm's monitor system. The server farm's monitor system reports on any incidents that occurred in any of the features of any of the servers in the server's farm.

These are reports on true incidents that occurred in monitored server farms and allow the ICAF optimizer to tune the aforementioned parameters so as to improve the ICAF algorithm in terms of the balance between its true positive rate (the rate of true incidents for which alerts are issued) and false positive rate (the rate of incident alerts that were issued for which no incident report was received from the server farms monitor system).

ICAF parameters may include any parameter that is useful for determining whether an incident alert should be issued or not. The parameters may be changed and defined differently for different cases. In an embodiment of the invention and as an example, the following parameters are used:
k, α - two parameters used for computing an almost-consecutive sequence of anomaly score objects. An almost-consecutive sequence is required to have an object with anomaly score at least α every at most k sequence objects.
β - the minimum number of almost-consecutive score objects that are required for a local aggregated anomalies sequence to be generated.
γ - the minimum time duration for a sequence of score objects that is required for a local aggregated anomalies sequence to be generated.
δ - a score value such that a sequence of score objects is required to have an object with this score or higher for a local aggregated anomalies sequence to be generated.
ε - the minimum time difference between a new local aggregated anomalies sequence and the previous local aggregated anomalies sequence (if any) for the same farm/server/feature for the new sequence not to be appended to the previous sequence.
ζ - the minimum time difference between a new local aggregated anomalies sequence and the previous global incident (if any) for the same farm for the new sequence not to be appended to the previous global incident. An incident in a servers farm (such as, e.g., disconnection from the network) may cause anomalous behavior in many features of many servers in this farm. All these are consolidated to a single GLOBAL incident. That is, a global incident is an incident at the server farm level that is composed of one or more features (of one or more servers) that are behaving in an anomalous manner.

In another embodiment the invention is an ICAF optimizer module that uses the history of anomaly score objects, incidents alerts and incident reports for optimizing the parameters of the ICAF algorithm. The optimizer can use any known optimization algorithm to optimize the ICAF algorithm. Moreover, since the ranges of feasible values for these parameters are bounded and not very large, an exhaustive search of the parameters space is feasible if parameter values are limited in their granularity. (For instance, parameter γ may be assumed to be bounded to values of 30 minutes or less, otherwise incidents cannot be detected fast enough. If measurements arrive every 5 minutes, then the values that may be assumed by γ need only to be multiples of 5 minutes. Similar bounds on values and granularity may be set for the other parameters as well.) The objective function used for optimization may be any function of the resulting TP and FP rates that strikes a desired balance.

An example of an objective function is the Area Under Curve (AUC) measure of the Receiver Operating Characteristic (ROC). The ROC curve represents the tradeoff between the True Positive Rate (TPR: number of real incidents that were identified by the system divided by the total number of incidents that occurred) and the False Positive Rate (FPR: number of false alarms generated by the system divided by total number of alarms it generated). Maximizing the AUC is one possible way of setting the consolidation parameters so as to strike a good balance between the TPR and FPR.

As described below, the logic of the ICAF module 170 is parameterized. ICAF parameters are dynamically optimized by the ICAF optimizer module 190.

Significant incidents are reported by the anomaly detection framework 100 to the server farm monitor 195. The details of confirmed incidents (whether detected by the anomaly detection framework or not), that is, real incidents that occurred in the monitored server farms, are sent to the ICAF optimizer module 190 which uses this information for optimizing the accuracy of the ICAF module 170. The ICAF optimizer 190 may use any appropriate optimization algorithm where the objective function may be any function of the resulting TP (True Positive) and FP (False Positive) rates that strikes a desired balance.

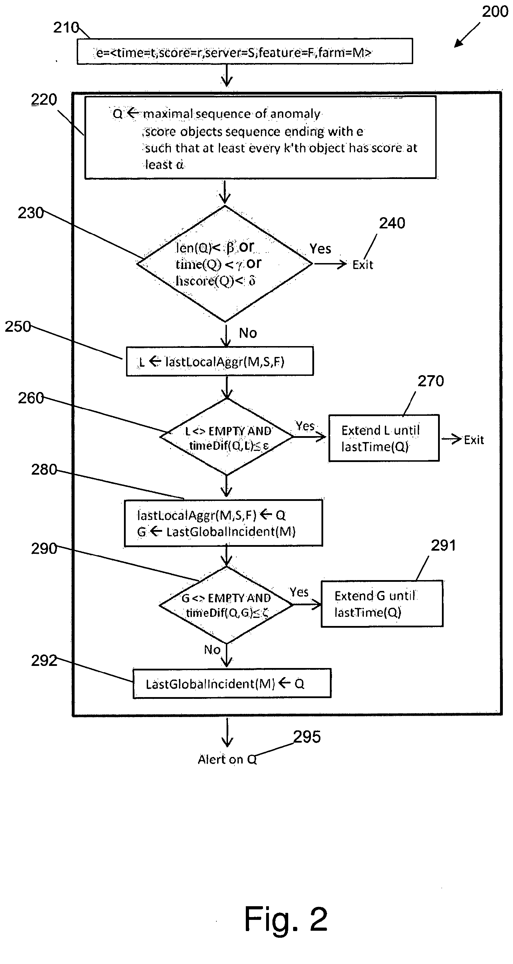

Fig. 2 shows a schematic flow chart of the consolidation algorithm which is part of the ICAF module 170:
1. As a first step 210, the input to the ICAF algorithm 200 is a series of point anomaly score objects 180 generated by anomaly detectors 140. This series is composed of multiple point anomaly series - one per every monitored farm. Each point anomaly score object e=(t,r,S,F,M), consists of a timestamp value t, an anomaly score r, a server name S, a feature name F, and a server-farm name M.
2. In the second step 220, when a point anomaly score object e is received, the longest sequence of almost-consecutive anomaly score objects (corresponding to the same farm, server and feature as those of e) ending with the point anomaly score object e, is computed, and is represented as Q. Q is a sequence (which may be an empty sequence) of anomaly score objects, such that at least every k'th object in the sequence has anomaly score of at least α (where k and α are ICAF parameters).
3. In the third step 230, the algorithm checks if either the length (in terms of object numbers) of Q is less than β (where β is an ICAF parameter) or the time duration of Q is less than γ (where γ is an ICAF parameter) or the highest score of all score objects in Q is less than δ (where δ is an ICAF parameter), if the answer to one of the three checks is yes, then the next step is 240, and the ICAF algorithm exits. In this case, no new incident alert is generated.
4. Otherwise, in step 250, Q is a local aggregated anomalies sequence. The previous local aggregated anomalies sequence corresponding to the same farm, server and feature (if any) is retrieved from the algorithm's data-structures and denoted L.
5. In the next step 260, if L is non-empty, the time difference between when Q starts and L finishes is computed. If this time difference is smaller than ε (where ε is an ICAF parameter) then the next step is 270 where L is extended with all the objects up until the last object of Q. This serves to reduce false positives stemming from a behavioral change that starts in L. No new incident alert is generated and the flow ends.
6. Otherwise, the next step is 280, and Q becomes the new, current aggregated anomalies sequence of the specific farm/server/feature combination. The previous global (that is, occurring in object *e*'s farm but not necessarily occurring in e's server/feature combination) incident (if any) is retrieved from the algorithm's data-structure and denoted G.
7. In step 290, if G is non-empty, then the time difference between when Q starts and G finishes is computed. If this time difference is smaller than ζ (where ζ is an ICAF parameter) then the following step is 291 where G is extended with all the objects up until the last object of Q. This serves to eliminate numerous alerts triggered by the same incident. In this case, no new incident alert is generated.
8. Otherwise the next step is 292, and Q becomes the new global incident of farm m. In this case, the following step is 295 wherein a new incident alert is generated for Q as an output of the ICAF algorithm. The incident alert is also the output of the ICAF module 170, and said output is sent to the server farm monitor 195.

Although embodiments of the invention have been described by way of illustration, it will be understood that the invention may be carried out with many variations, modifications, and adaptations, without exceeding the scope of the claims.

The invention is a system and method for anomaly detection in IT servers using incident consolidation. The anomaly detection is done by measuring different computing performance features such as CPU load, memory consumption, I/O level of activity, etc. at some specific frequency and then, consolidating point anomalies to higher-level objects called incidents. Each incident is checked according to specific parameters and if the checked incident is found to be an anomaly incident, the incident triggers an incident alert, which is communicated to a system administrator.

## Claims

1. A system for anomaly detection in IT servers, said system comprising:
a. a data import unit (120), that receives a time-series of measurements of multiple server features and/or measurements corresponding to higher level time-varying features from one or more monitored servers (110) and transfers said time-series measurements to a detection framework data base (130) and to a time-series anomaly detectors module (140);
b. a detection framework data base (130), that receives said time-series of measurements from said data import unit (120), receives point anomaly score objects each consisting of a timestamp value t, an anomaly score r, a server name S, a feature name F, and a server-farm name M, from said time-series anomaly detectors module (140), receives statistical models (160) from a model learners module (150), receives incident alerts from an Incident Consolidation And Filtering, ICAF, module (170), and receives incident reports that are reports on true incidents that occurred in monitored server farms from a server farm monitor (195); and transfers said statistical models (160) to said time-series anomaly detectors module (140) and transfers said time-series measurements and said incident reports to said model learners module (150);
c. a model learners module (150), which uses said time series of a sliding window of measurements that are read from said framework database (130) and said incident reports that are received from a server farm's monitor (195), to generate said statistical models (160);
d. a time-series anomaly detectors module (140), which receives said time-series measurements from said data import unit (120) and said statistical models (160) from said detection framework data base (130) and point anomaly scores, which are transferred to said detection framework data base, to said ICAF module, and to an ICAF optimizer module;
e. an Incident Consolidation And Filtering, ICAF, module (170), which comprises and runs an ICAF algorithm (200) as defined in steps e. to g. of claim 8, which checks each of said point anomaly score objects according to a predetermined set of ICAF parameters that are sent to said ICAF module (170), and generates incident alerts by consolidating said point anomaly score objects;
f. an Incident Consolidation And Filtering, ICAF, Optimizer module (190), which uses module point anomaly score objects, received from said time-series anomaly detector module (140), said incident alerts received from said ICAF module (170) and said incident reports received from said server farm monitor (195) as input to an optimization algorithm that optimizes the values of said ICAF parameters that are used by said ICAF algorithm (200) to generate said incident alerts;
g. a server farm monitor (195) that produces said incident reports, which are reports of true incidents that occurred in said monitored servers; and
h. a system administrator (197) who receives said incident alerts generated by said ICAF module (170);
wherein said ICAF module (170) consolidates the sequence of said point anomaly score objects to reduce the rate of said incident alerts thus allowing an administrator to only inspect and analyze a relatively small number of alerts; and said ICAF optimizer module (190) continuously tunes and transfers said ICAF parameters to said ICAF module (170) so as to improve said ICAF algorithm (200) in terms of the balance between its true positive rate and its false positive rate.

2. A system according to claim 1, wherein said time-series measurement is CPU load.

3. A system according to claim 1, wherein said time-series measurement is memory consumption.

4. A system according to claim 1, wherein said time-series measurement is I/O level of activity.

5. A system according to claim 1, wherein said time-series measurement is a rate of business transactions.

6. A system according to claim 1, wherein said time-series measurement is an average transaction latency.

7. A system according to claim 1, wherein the ICAF parameters are:
i. k, α, - k is a number of sequence objects and α is a number of anomaly score; wherein, a sequence known as an almost-consecutive sequence is required to have an object with anomaly score of at least α every at most k sequence objects;
ii. β - a minimum number of score objects in an almost-consecutive sequence that are required for a local aggregated anomalies sequence to be generated;
iii. γ - a minimum time duration for a sequence of score objects that is required for a local aggregated anomalies sequence to be generated;
iv. δ - a score value such that a sequence of score objects is required to have an object with this score or higher for a local aggregated anomalies sequence to be generated;
v. ε - a minimum time difference between a new local aggregated anomalies sequence and the previous local aggregated anomalies sequence, if any, for the same farm/server/feature for the new sequence not to be appended to the previous sequence; and
vi. ζ - a minimum time difference between a new local aggregated anomalies sequence and the previous global incident, if any, for the same farm for the new sequence not to be appended to the previous global incident.

8. A method of using the system of claim 1 for incident consolidation for IT server anomaly detection, the method comprising the steps of:
a. receiving at a data import unit (120) a time-series of measurements of multiple server features and/or measurements corresponding to higher level time-varying features from one or more monitored servers;
b. receiving at a time-series anomaly detectors module (140) said time-series measurements from said data import unit (120) and statistical models (160) generated by a model learners module (150);
c. implementing in said time-series anomaly detectors module (140) a time-series anomaly detection algorithm to compute a series of point anomaly score objects (210), wherein each point anomaly score object consists of a timestamp value t, an anomaly score r, a server name S, a feature name F, and a server-farm name M;
d. receiving at an an Incident Consolidation And Filtering, ICAF, module (170) said series of point anomaly score objects ;
e. running an ICAF algorithm (200) in said ICAF module (170) to compute the longest sequence of almost-consecutive anomaly score objects ending with a point anomaly score object (e), and representing said longest sequence as Q; wherein Q is a sequence of anomaly score objects, such that at least every k'th object in the sequence has anomaly score of at least α (220), said almost-consecutive sequence is required to have an object with anomaly score of at least α every at most k sequence objects;
f. running said ICAF algorithm (200) to check (230) if either the length of Q is less than an ICAF parameter β, which is a minimum number of score objects in Q that are required for a local aggregated anomalies sequence to be generated, or the time duration of Q is less than an ICAF parameter γ, which is a minimum time duration for a sequence of score objects that is required for a local aggregated anomalies sequence to be generated, or the highest score of all score objects in Q is less than an ICAF parameter δ, which is a score value such that a sequence of score objects is required to have an object with this score or higher for a local aggregated anomalies sequence to be generated; if the answer to one of the three checks is yes (230), then exiting and no new incident alert is generated; if the answer to none of the three checks is yes, then defining Q as a local aggregated anomalies sequence and retrieving (250) the previous local aggregated anomalies sequence corresponding to the same farm, server and feature of Q, if they exist, and denoting said previous local aggregated anomalies sequence as L;
g. running said ICAF algorithm (200) to compute the time difference between when Q starts and L finishes (260), if L is not empty; if said time difference is smaller than an ICAF parameter ε, which is a minimum time difference between a new local aggregated anomalies sequence and the previous local aggregated anomalies sequence, if any, for the same farm/server/feature for the new sequence not to be appended to the previous sequence, then extending L (270) with all the objects up until the last object of Q and exiting; if said time difference is larger than ε, turning Q to the new, current aggregated anomalies sequence of the specific farm/server/feature combination, and retrieving (280) a previous global incident and denoting said global incident as G, if it exists, otherwise, turning Q to the new global incident of farm m;
h. if G is non-empty (290), running said ICAF algorithm (200) to compute the time difference between when Q starts and G finishes; if this time difference is smaller than an ICAF parameter ζ, which is a minimum time difference between a new local aggregated anomalies sequence and the previous global incident, if any, for the same farm for the new sequence not to be appended to the previous global incident, then extending G (291) with all the objects up until the last object of Q; if the time difference is larger than ζ, turning Q to the new global incident of farm m and generating a new incident alert (295) for Q and providing said incident alert as an output;
wherein following monitoring server farms to detect true incidents, an ICAF optimizer module (190) continuously tunes and transfers to said ICAF module (170) the ICAF parameters k, α, β, γ, δ, ε, and ζ so as to improve said ICAF algorithm (200) in terms of the balance between its true positive rate and its false positive rate.

## Patentansprüche

1. System zur Detektion von Anomalien in IT-Servern, das System umfassend:
a. eine Datenimport-Einheit (120), welche eine Zeitserie von Messungen von mehreren Server-Eigenschaften und/oder Messungen entsprechend zeitlich variierender Eigenschaften einer höheren Ebene von einem oder mehreren überwachten Servern (110) empfängt und die Zeitserien-Messungen zu einer Detektionsframework-Datenbank (130) und zu einem Zeitserien-Anomaliedetektorenmodul (140) überträgt;
b. eine Detektionsframework-Datenbank (130), welche die Zeitserien von Messungen von der Datenimport-Einheit (120) empfängt, Punktanomalie-Bewertungsobjekte, welche jeweils aus einem Zeitstempel-Wert t, einer Anomaliebewertung r, einem Servernamen S, einem Eigenschaftsnamen F und einem Serverfarm-Namen M bestehen, von dem Zeitserien-Anomaliedetektorenmodul (140) empfängt, statistische Modelle (160) von einem Modell-Lernmodul (150) empfängt, eigehende Alarme von einem Vorfallkonsolidierungs- und Filterungs- , ICAF, Modul (170) empfängt und Vorfallberichte, welche Berichte über tatsächliche Vorfälle sind, welche in überwachten Serverfarmen aufgetreten sind, von einer Serverfarm-Überwachung (195) empfängt; und die statistischen Modelle (160) zu dem Zeitserien-Anomaliedetektorenmodul (140) überträgt und die Zeitserien-Messungen und die Vorfallberichte zu dem Modell-Lernmodul (150) überträgt;
c. ein Modell-Lernmodul (150), welches die Zeitserien eines Gleitfensters von Messungen, welche aus der Framework-Datenbank (130) ausgelesen werden, und die Vorfallberichte, welche von einer Überwachung (195) einer Serverfarm erhalten werden, zum Erzeugen der statistischen Modelle (160) verwendet;
d. ein Zeitserien-Anomaliedetektorenmodul (140), welches die Zeitserien-Messungen von der Datenimport-Einheit (120) und die statistischen Modelle (160) von der Detektionsframework-Datenbank (130) empfängt, sowie Punktanomalie-Bewertungen, welche zu der Detektionsframework-Datenbank, zu dem ICAF-Modul und zu einem ICAF-Optimierungsmodul übertragen werden;
e. ein Vorfallkonsolidierungs- und Filterungs- , ICAF, Modul (170), welches einen ICAF-Algorithmus (200) wie in den Schritten e. bis g. von Anspruch 8 definiert umfasst und ausführt, welcher jedes der Punktanomalie-Bewertungsobjekte gemäß einem vorbestimmten Satz von ICAF-Parametern überprüft, welche zu dem ICAF-Modul (170) gesendet werden, und Vorfallalarme durch Konsolidieren der Punktanomalie-Bewertungsobjekte erzeugt;
f. ein Vorfallkonsolidierungs- und Filterungs- , ICAF, Optimierungsmodul (190), welches Modulpunkt-Anomaliebewertungsobjekte, welche von dem Zeitserien-Anomaliedetektorenmodul (140) empfangen werden, die von dem ICAF-Modul (170) empfangenen Vorfallalarme und die von der Serverfarm-Überwachung (195) empfangenen Berichte als Eingabe für einen Optimierungsalgorithmus verwendet, welcher die Werte der ICAF-Parameter optimiert, welche von dem ICAF-Algorithmus (200) verwendet werden, um die Vorfallalarme zu erzeugen;
g. eine Serverfarm-Überwachung (195), welche die Vorfallberichte erzeugt, welche Berichte über tatsächliche Vorfälle sind, welche in den überwachten Servern aufgetreten sind; und
h. einen Systemadministrator (197), welcher die Vorfallalarme empfängt, welche von dem ICAF-Modul (170) erzeugt werden;
wobei das ICAF-Modul (170) die Abfolge der Punktanomalie-Bewertungsobjekte konsolidiert, um die Rate der Vorfallalarme zu reduzieren, wodurch einem Administrator erlaubt wird, lediglich eine relativ geringe Anzahl von Alarmen zu inspizieren und analysieren; wobei das ICAF-Optimierungsmodul (190) kontinuierlich die ICAF-Parameter anpasst und zu dem ICAF-Modul (170) überträgt, um so den ICAF-Algorithmus (200) hinsichtlich der Balance zwischen seiner Richtig-Positiv-Rate und seiner Falsch-Positiv-Rate zu verbessern.

2. System nach Anspruch 1, wobei die Zeitserien-Messung eine CPU-Last ist.

3. System nach Anspruch 1, wobei die Zeitserien-Messung ein Speicherverbrauch ist.

4. System nach Anspruch 1, wobei die Zeitserien-Messung ein I/O-Aktivitätsniveau ist.

5. System nach Anspruch 1, wobei die Zeitserien-Messung eine Rate von Geschäftstransaktionen ist.

6. System nach Anspruch 1, wobei die Zeitserien-Messung eine durchschnittliche Transaktionslatenz ist.

7. System nach Anspruch 1, wobei die ICAF-Parameter sind:
i. k, α - k ist eine Zahl von Abfolgeobjekten und α ist eine Zahl einer Anomaliebewertung; wobei eine Abfolge, welche als eine beinahe aufeinander folgende Abfolge bekannt ist, benötigt, dass sie ein Objekt mit einer Anomaliebewertung von wenigstens α alle höchstens k Abfolgeobjekte aufweist;
ii. β - eine minimale Anzahl von Bewertungsobjekten in einer beinahe aufeinander folgenden Abfolge, welche benötigt werden, damit eine lokale angesammelte Anomalieabfolge erzeugt wird;
iii. γ - eine minimale Zeitdauer für eine Abfolge von Bewertungsobjekten, welche benötigt wird, damit eine lokale angesammelte Anomalieabfolge erzeugt wird;
iv. δ - ein Bewertungswert, derart, dass eine Abfolge von Bewertungsobjekten benötigt, dass sie ein Objekt mit dieser Bewertung oder höher aufweist, damit eine lokale angesammelte Anomalieabfolge erzeugt wird;
v. ε - eine minimale Zeitdifferenz zwischen einer neuen lokalen angesammelten Anomalieabfolge und der vorhergehenden lokalen angesammelten Anomalieabfolge, falls vorliegend, damit dieselbe Farm / derselbe Server / dieselbe Eigenschaft für die neue Abfolge nicht an die vorhergehende Abfolge angehängt wird; und
vi. ζ - eine minimale Zeitdifferenz zwischen einer neuen lokalen angesammelten Anomalieabfolge und dem vorhergehenden globalen Vorfall, falls vorliegend, für dieselbe Farm, damit die neue Abfolge nicht an den vorhergehenden globalen Vorfall angehängt wird.

8. Verfahren zum Verwenden des Systems nach Anspruch 1 zur Vorfallkonsolidierung für eine IT-Server-Anomaliedetektion, das Verfahren umfassend die Schritte:
a. Empfangen einer Zeitserie von Messungen von mehreren Server-Eigenschaften und/oder Messungen entsprechend zeitlich variierender Eigenschaften einer höheren Ebene von einem oder mehreren überwachten Servern bei einer Datenimport-Einheit (120);
b. Empfangen der Zeitserien-Messungen von der Datenimport-Einheit (120) und statistischer Modelle (160), welche von einem Model-Lernmodul (150) erzeugt werden, bei einem Zeitserien-Anomaliedetektorenmodul (140);
c. Implementieren eines Zeitserien-Anomaliedetektionsalgorithmus in dem Zeitserien-Anomaliedetektorenmodul (140), um eine Serie von Punktanomalie-Bewertungsobjekten (210) zu berechnen, wobei jedes Punktanomalie-Bewertungsobjekt aus einem Zeitstempel-Wert t, einer Anomaliebewertung r, einem Servernamen S, einem Eigenschaftsnamen F und einem Serverfarm-Namen M besteht;
d. Empfangen der Serie von Punktanomalie-Bewertungsobjekten bei einem Vorfallkonsolidierungs- und Filterungs- , ICAF, Modul (170);
e. Durchführen eines ICAF-Algorithmus (200) in dem ICAF-Modul (170), um die längste Abfolge von beinahe aufeinander folgenden Anomalie-Bewertungsobjekten zu berechnen, welche mit einem Punktanomalie-Bewertungsobjekt (e) endet, und die längste Abfolge als Q zu repräsentieren; wobei Q eine Abfolge von Anomalie-Bewertungsobjekten ist, so dass jedes k-te Objekt in der Abfolge eine Anomaliebewertung von wenigstens α aufweist (220), wobei die beinahe aufeinanderfolgende Abfolge benötigt, dass sie ein Objekt mit einer Anomaliebewertung von wenigstens α höchstens alle k Abfolgeobjekte aufweist;
f. Durchführen des ICAF-Algorithmus (200), um zu überprüfen (230), ob entweder die Länge Q kleiner als ein ICAF-Parameter β ist, welcher eine minimale Zahl von Bewertungsobjekten in Q ist, welche benötigt werden, damit eine lokale angesammelte Anomalieabfolge erzeugt wird, oder ob die Zeitdauer von Q kleiner als ein ICAF-Parameter γ ist, welcher eine minimale Zeitdauer für ein Erzeugen einer Abfolge von Bewertungsobjekten ist, welche benötigt wird, damit eine lokale angesammelte Anomalieabfolge erzeugt wird, ober die höchste Bewertung von allen Bewertungsobjekten in Q kleiner als ein ICAF-Parameter δ ist, welcher ein Bewertungswert ist, derart, dass eine Abfolge von Bewertungsobjekten benötigt, ein Objekt mit dieser Bewertung oder höher aufzuweisen, damit eine lokale angesammelte Anomalieabfolge erzeugt wird; wenn die Antwort auf eine der drei Überprüfungen ja ist (230), dann wird verlassen und kein neuer Vorfallalarm wird erzeugt; wenn die Antwort auf keine der drei Überprüfungen ja ist, dann wird Q als eine lokale angesammelte Anomalieabfolge definiert und die vorhergehende lokale angesammelte Anomalieabfolge entsprechend derselben Farm, demselben Server und derselben Eigenschaft von Q, falls vorliegend, empfangen (250) und die vorhergehende lokale angesammelte Anomalieabfolge als L bezeichnet;
g. Durchführen des ICAF-Algorithmus (200), um die Zeitdifferenz zwischen wenn Q beginnt und L endet (260) zu berechnen, wenn L nicht leer ist; wenn die Zeitdifferenz kleiner als ein ICAF-Parameter ε ist, welcher eine minimale Zeitdifferenz zwischen einer neuen lokalen angesammelten Anomalieabfolge und der vorhergehenden lokalen Anomalieabfolge, falls vorliegend, für dieselbe Farm / denselben Server / dieselbe Eigenschaft ist, damit die neue Abfolge nicht an die vorhergehende Abfolge angehängt wird, dann Erweitern von L (270) mit all den Objekten bis zu dem letzten Objekt von Q und Verlassen; wenn die Zeitdifferenz größer als ε ist, Überführen von Q zu der neuen, momentanen angesammelten Anomalieabfolge der spezifischen Farm/Server/Eigenschaft-Kombination, und Empfangen (280) eines vorhergehenden globalen Vorfalls und Bezeichnen des globalen Vorfalls als G, falls er existiert, ansonsten Überführen von Q zu dem neuen globalen Vorfall von Farm m;
h. wenn G nicht leer ist (290), Durchführen des ICAF-Algorithmus (200), um die Zeitdifferenz zwischen wenn Q beginnt und G endet zu berechnen; wenn diese Zeitdifferenz kleiner als ein ICAF-Parameter ζ ist, welcher eine minimale Zeitdifferenz zwischen einer neuen lokalen angesammelten Anomalieabfolge und dem vorhergehenden globalen Vorfall, falls vorliegend, für die selbe Farm ist, damit die neue Abfolge nicht an den vorhergehenden globalen Vorfall angehängt wird, dann Erweitern von G (291) mit all den Objekten bis zu dem letzten Objekt von Q; wenn die Zeitdifferenz größer als ζ ist, Überführen von Q zu dem neuen globalen Vorfall von Farm m und Erzeugen eines neuen Vorfallalarms (295) für Q und Bereitstellen des Vorfallalarms als eine Ausgabe;
wobei einem Überwachen von Serverfarmen zum Detektieren von tatsächlichen Vorfällen folgend ein ICAF-Optimierungsmodul (190) kontinuierlich die ICAF-Parameter k, α, β, γ, δ, ε und ζ anpasst und an das ICAF-Modul (170) überträgt, so dass der ICAF-Algorithmus (200) hinsichtlich der Balance zwischen seiner Richtig-Positiv-Rate und seiner Falsch-Positiv-Rate verbessert wird.

## Revendications

1. Système de détection d'anomalie dans des serveurs informatiques, ledit système comprenant :
a. une unité d'importation de données (120), qui reçoit une série chronologique de mesures de multiples caractéristiques et/ou de mesures correspondant à des caractéristiques variant dans le temps de niveau plus élevé depuis un ou plusieurs serveurs surveillés (110) et transfère lesdites mesures de série chronologique vers une base de données de structure de détection (130) et vers un module de détecteurs d'anomalie de série chronologique (140) ;
b. une base de données de structure de détection (130), qui reçoit ladite série chronologique de mesures depuis ladite unité d'importation de données (120), reçoit des objets de score d'anomalie ponctuelle constitués chacun d'une valeur d'estampille temporelle t, d'un score d'anomalie r, d'un nom de serveur S, d'un nom de caractéristique F et d'un nom de groupe de serveurs M, depuis ledit module de détecteurs d'anomalie de série chronologique (140), reçoit des modèles statistiques (160) depuis un module d'apprentissage de modèle (150), reçoit des alertes d'incident depuis un module de consolidation et de filtrage d'incident, ICAF, (170) et reçoit des rapports d'incident qui sont des rapports sur des incidents vrais qui sont survenus dans des groupes de serveurs surveillés depuis un surveillant de groupes de serveurs (195) ; et transfère lesdits modèles statistiques (160) audit module de détecteurs d'anomalie de série chronologique (140) et transfère lesdites mesures de série chronologique et lesdits rapports d'incident audit module d'apprentissage de modèle (150) ;
c. un module d'apprentissage de modèle (150), qui utilise ladite série chronologique d'une fenêtre coulissante de mesures qui sont lues dans ladite base de données de structure (130) et lesdits rapports d'incident qui sont reçus depuis un surveillant de groupes de serveurs (195), pour générer lesdits modèles statistiques (160) ;
d. un module de détecteurs d'anomalie de série chronologique (140), qui reçoit lesdites mesures de série chronologique depuis ladite unité d'importation de données (120) et lesdits modèles statistiques (160) depuis ladite base de données de structure de détection (130) et des scores d'anomalie ponctuelle, qui sont transférés à ladite base de données de structure de détection, audit module ICAF et à un module optimiseur ICAF ;
e. un module de consolidation et de filtrage d'incident, ICAF, (170), qui comprend et exécute un algorithme ICAF (200) tel qu'il est défini dans les étapes e. à g. de la revendication 8, qui contrôle chacun desdits objets de score d'anomalie ponctuelle selon un ensemble prédéterminé de paramètres ICAF qui sont envoyés audit module ICAF (170), et génère des alertes d'incident par consolidation desdits objets de score d'anomalie ponctuelle ;
f. un module d'optimiseur de consolidation et de filtrage d'incident, ICAF, (190), qui utilise des objets de score d'anomalie ponctuelle de module, reçus depuis ledit module de détecteurs d'anomalie de série chronologique (140), lesdites alertes d'incident reçues dudit module ICAF (170) et lesdits rapports d'incident reçus dudit surveillant de groupes de serveurs (195) comme entrée pour un algorithme d'optimisation qui optimise les valeurs desdits paramètres ICAF qui sont utilisés par ledit algorithme ICAF (200) pour générer lesdites alertes d'incident ;
g. un surveillant de groupes de serveurs (195) qui produit lesdits rapports d'incident, qui sont des rapports d'incidents vrais qui sont survenus dans lesdits serveurs surveillés ; et
h. un administrateur système (197) qui reçoit lesdites alertes d'incident générées par ledit module ICAF (170) ;
dans lequel
ledit module ICAF (170) consolide la séquence desdits objets de score d'anomalie ponctuelle pour réduire le taux desdites alertes d'incident autorisant de cette façon un administrateur à examiner et analyser uniquement un nombre relativement petit d'alertes ; et ledit module optimiseur ICAF (190) ajuste et transfère continuellement lesdits paramètres ICAF audit module ICAF (170) afin d'améliorer ledit algorithme ICAF (200) en ce qui concerne l'équilibre entre son taux de conclusions vraies et son taux de conclusions fausses.

2. Système selon la revendication 1, dans lequel ladite mesure de série chronologique est une charge de CPU.

3. Système selon la revendication 1, dans lequel ladite mesure de série chronologique est une consommation de mémoire.

4. Système selon la revendication 1, dans lequel ladite mesure de série chronologique est un niveau d'activités d'E/S.

5. Système selon la revendication 1, dans lequel ladite mesure de série chronologique est un taux de transactions commerciales.

6. Système selon la revendication 1, dans lequel ladite mesure de série chronologique est une latence moyenne de transaction.

7. Système selon la revendication 1, dans lequel les paramètres ICAF sont :
i. k, α, - k est un nombre d'objets de séquence et α est un nombre de score d'anomalie ; dans lequel, une séquence connue en tant que séquence presque consécutive est requise pour avoir un objet avec un score d'anomalie d'au moins a pour tous les au plus k objets de séquence ;
ii. β - un nombre minimal d'objets de score dans une séquence presque consécutive qui sont requis pour une séquence d'anomalies agrégées locales à générer ;
iii. γ - une durée temporelle minimale pour une séquence d'objets de score qui est requise pour une séquence d'anomalies agrégées locales à générer ;
iv. δ - une valeur de score de sorte qu'une séquence d'objets de score est requise d'avoir un objet avec ce score ou avec un score plus élevé pour une séquence d'anomalies agrégées locales à générer ;
v. ε - une différence de temps minimale entre une nouvelle séquence d'anomalies agrégées locales et les séquences d'anomalies agrégées locales précédentes, s'il y en a, pour le même groupe/serveur/caractéristique pour la nouvelle séquence ne devant pas être jointe à la séquence précédente ; et
vi. ζ - une différence de temps minimale entre une nouvelle séquence d'anomalies agrégées locales et l'incident global précédent, s'il y en a, pour le même groupe pour la nouvelle séquence ne devant pas être jointe à l'incident global précédent.

8. Procédé d'utilisation du système selon la revendication 1 pour une consolidation d'incident pour une détection d'anomalie de serveurs informatiques, le procédé comprenant les étapes consistant à :
a. recevoir, au niveau d'une unité d'importation de données (120), une série chronologique de mesures de multiples caractéristiques de serveur et/ou de mesures correspondant à des caractéristiques variant dans le temps de niveau plus élevé depuis un ou plusieurs serveurs surveillés ;
b. recevoir, au niveau d'un module de détecteurs d'anomalie de série chronologique (140), lesdites mesures de série chronologique depuis ladite unité d'importation de données (120) et des modèles statistiques (160) générés par un module d'apprentissage de modèle (150) ;
c. mettre en oeuvre dans ledit module de détecteurs d'anomalie de série chronologique (140) un algorithme de détection d'anomalie de série chronologique pour calculer une série d'objets de score d'anomalie ponctuelle (210), dans lequel chaque objet de score d'anomalie ponctuelle est constitué d'une valeur d'estampille temporelle t, d'un score d'anomalie r, d'un nom de serveur S, d'un nom de caractéristique F et d'un nom de groupe de serveurs M ;
d. recevoir, au niveau d'un module de consolidation et de filtrage d'incident, ICAF, (170), ladite série d'objets de score d'anomalie ponctuelle ;
e. exécuter un algorithme ICAF (200) dans ledit module ICAF (170) pour calculer la plus longue séquence d'objets de score d'anomalie presque consécutifs se terminant avec un objet de score d'anomalie ponctuelle (e), et représentant ladite plus longue séquence en tant que Q ; dans lequel Q est une séquence d'objets de score d'anomalie, de sorte qu'au moins chaque k-ième objet dans la séquence a un score d'anomalie d'au moins a (220), ladite séquence presque consécutive est requise pour avoir un objet avec un score d'anomalie d'au moins a pour tous les au plus k objets de séquence ;
f. exécuter ledit algorithme ICAF (200) pour contrôler (230) si soit la longueur de Q est inférieure à un paramètre ICAF β, qui est un nombre minimal d'objets de score dans Q qui sont requis pour une séquence d'anomalies agrégées locales à générer, soit la durée temporelle de Q est inférieure à un paramètre ICAF γ, qui est une durée temporelle pour une séquence d'objets de score qui est requise pour une séquence d'anomalies agrégées locales à générer, soit le score le plus élevé de tous les objets de score dans Q est inférieur à un paramètre ICAF δ, qui est une valeur de score de sorte qu'une séquence d'objets de score est requise pour avoir un objet avec ce score ou avec un score plus élevé pour une séquence d'anomalies agrégées locales à générer ; si la réponse à un des trois contrôles est oui (230), alors quitter et aucune nouvelle alerte d'incident n'est générée ; si la réponse à aucun des trois contrôles n'est oui, alors définir Q en tant que séquence d'anomalies agrégées locales et récupérer (250) la séquence d'anomalies agrégées locales précédente correspondant au même groupe, serveur et caractéristique de Q, s'ils existent, et désigner ladite séquence d'anomalies agrégées locales précédente par L ;
g. exécuter ledit algorithme ICAF (200) pour calculer la différence de temps entre les instants lorsque Q démarre et L se termine (260), si L n'est pas vide ; si ladite différence de temps est plus petite qu'un paramètre ICAF ε, qui est une différence de temps minimale entre une nouvelle séquence d'anomalies agrégées locales et la séquence d'anomalies agrégées locales précédente, s'il y en a, pour le même groupe/serveur/caractéristique pour la nouvelle séquence ne devant pas être jointe à la séquence précédente, alors étendre L (270) avec tous les objets jusqu'au dernier objet de Q et quitter ; si ladite différence de temps est plus grande que ε, tourner Q vers la nouvelle séquence d'anomalies agrégées actuelles de la combinaison spécifique de groupe/serveur/caractéristique, et récupérer (280) un incident global précédent et désigner ledit incident global par G, s'il existe, sinon, tourner Q vers le nouvel incident global de groupe m ;
h. si G n'est pas vide (290), exécuter ledit algorithme ICAF (200) pour calculer la différence de temps entre les instants lorsque Q démarre et G se termine ; si cette différence de temps est plus petite qu'un paramètre ICAF ζ, qui est une différence de temps minimale entre une nouvelle séquence d'anomalies agrégées locales et l'incident global précédent, s'il y en a, pour le même groupe pour la nouvelle séquence à ne pas joindre à l'incident global précédent, alors étendre G (291) avec tous les objets jusqu'au dernier objet de Q ; si la différence de temps est plus grande que ζ, tourner Q vers le nouvel incident global de groupe m et générer une nouvelle alerte d'incident (295) pour Q et fournir ladite alerte d'incident en tant que sortie ; dans lequel suite à la surveillance de groupes de serveurs pour détecter de vrais incidents, un module optimiseur ICAF (190) accorde continuellement et transfère audit module ICAF (170) les paramètres ICAF k, α, β, γ, δ, ε et ζ de sorte à améliorer ledit algorithme ICAF (200) en ce qui concerne l'équilibre entre son taux de conclusions vraies et son taux de conclusions fausses.
